# FASCICULE DE BREVET EUROPEEN

(11) **EP 4 603 322 B1**
(45) Date de publication et mention de la délivrance du brevet: **18.11.2026**
(21) Numéro de dépôt: 25156948.9
(22) Date de dépôt: 10.02.2025
(51) Int. Cl.: B60L 53/31, H01H 9/04

(54) **SYSTÈME ÉLECTRIQUE, NOTAMMENT UNE BORNE DE RECHARGE D'UN VÉHICULE**
ELEKTRISCHES SYSTEM, INSBESONDERE LADEANSCHLUSS EINES FAHRZEUGS
ELECTRICAL SYSTEM, IN PARTICULAR A CHARGING STATION OF A VEHICLE

(30) Priorité: 14.02.2024 FR 2401425
(43) Date de publication de la demande: 20.08.2025
(73) Titulaire: Legrand France, 87000 Limoges (FR); Legrand SNC, 87000 Limoges (FR)
(72) Inventeur: ANGLADE, Bruno, 87000 Limoges (FR)
(74) Mandataire: Santarelli

(56) Documents cités:
- EP-B1- 2 727 123
- CN-A- 115 548 759
- DE-U- 1 749 583
- DE-U- 1 797 826
- KR-U- 20110 004 010
- US-A1- 2021 408 785

## Description

### DOMAINE TECHNIQUE DE L'INVENTION

L'invention concerne un système électrique, notamment une borne de recharge d'un véhicule électrique ou hybride.

Elle concerne aussi un procédé d'utilisation d'un tel système électrique.

### ÉTAT DE LA TECHNIQUE

Les systèmes électriques du type bornes de recharge pour véhicules électriques ou hybrides, sont généralement pourvus d'un boîtier, d'une source d'alimentation électrique et d'un appareillage électrique, tel qu'un disjoncteur ou un interrupteur différentiel, logé dans le boîtier et configuré pour permettre ou interrompre une continuité électrique entre la source d'alimentation électrique et par exemple le véhicule électrique ou hybride.

Un tel appareillage électrique comporte un levier de réarmement qui doit rester accessible pour être aisément actionné par un utilisateur, par exemple au travers d'une fenêtre ou trappe d'accès ménagée dans le boîtier.

Les bornes de recharge sont souvent à l'extérieur et soumises aux intempéries. La fenêtre d'accès ménagée dans le boîtier de telles bornes de recharge doit donc être protégée.

Il existe des solutions pour protéger une telle fenêtre d'accès ménagée dans un boîtier.

Par exemple, il peut s'agir d'un couvercle rapporté sur le boîtier ou articulé par rapport au boîtier, et disposé en regard de la fenêtre d'accès. Le document CN 115548759 décrit un système électrique, en particulier une borne de recharge destinée à un véhicule électrique ou hybride. Ce système comprend un boîtier muni d'un couvercle ayant une ouverture et d'au moins une fenêtre d'accès, boîtier dans lequel est disposé au moins un appareillage électrique, par exemple un disjoncteur ou un interrupteur différentiel. Cet appareillage présente au moins un levier de réarmement, accessible depuis la fenêtre d'accès du boîtier lorsque le couvercle est ouvert grâce à son ouverture.

Par ailleurs, il est connu des capuchons d'étanchéité disposés devant des appareillages électriques tels que des interrupteurs ou des disjoncteurs. Des capuchons d'étanchéité sont décrits dans les documents DE 1749583 U et EP 2 727 123B1.

### EXPOSÉ DE L'INVENTION

L'invention concerne un système électrique, notamment une borne de recharge pour véhicule électrique ou hybride, dont le levier de réarmement de l'appareillage électrique du type disjoncteur ou interrupteur différentiel est à la fois accessible et protégé, d'une manière particulièrement performante tout en étant simple, commode et économique.

L'invention a ainsi pour objet, selon un premier aspect, un système électrique, notamment une borne de recharge d'un véhicule électrique ou hybride, pourvu d'un boîtier ayant au moins une fenêtre d'accès, d'au moins un appareillage électrique, notamment du type disjoncteur ou interrupteur différentiel, logé dans le boîtier et comportant au moins un levier de réarmement de l'au moins un appareillage électrique accessible directement depuis l'au moins une fenêtre d'accès du boîtier, et d'au moins une membrane de protection assujettie sur le boîtier au niveau de l'au moins une fenêtre d'accès et configurée pour étancher le boîtier au niveau de l'au moins une fenêtre d'accès et pour permettre de manipuler l'au moins un levier de réarmement par l'au moins une fenêtre d'accès ; l'au moins une membrane de protection comportant :
un contour formé par une première lèvre et une deuxième lèvre en regard de la première lèvre de sorte à ménager une gorge périphérique, avec l'au moins une membrane de protection qui est assujettie par son contour sur un bord du boîtier délimitant l'au moins une fenêtre d'accès, lequel bord est introduit dans ladite gorge périphérique et pincé par la première lèvre et la deuxième lèvre ;
une portion centrale de préhension située à distance du contour et en regard de l'au moins un levier de réarmement ;
une portion intermédiaire flexible s'étendant entre le contour et la portion centrale de préhension et qui est pourvue d'au moins un premier tronçon s'étendant depuis le contour selon une première direction globalement transversale à l'au moins une fenêtre d'accès, d'un deuxième tronçon s'étendant depuis la portion centrale de préhension selon la même première direction globalement transversale, et d'un pli raccordant l'au moins un premier tronçon et le deuxième tronçon ;
avec l'au moins une membrane de protection qui est configurée pour permettre de manipuler l'au moins un levier de réarmement en étirant la portion intermédiaire flexible autour du pli.

Dans le système électrique selon l'invention, l'au moins une membrane de protection permet à la fois d'étancher et de manipuler directement et sûrement l'au moins un levier de réarmement de l'au moins un appareillage électrique au travers de l'au moins une fenêtre d'accès ménagée dans le boîtier.

En particulier, l'au moins une membrane de protection est configurée pour fournir une zone de préhension formée par la portion centrale de préhension et une zone d'étirement formée par la portion intermédiaire flexible, qui permet de rendre mobile la zone de préhension formée par la portion centrale de préhension, facilitant ainsi la manipulation de l'au moins un levier de réarmement, sans détériorer l'au moins une membrane de protection et sans la retirer du boîtier.

Des caractéristiques préférées, simples, commodes et économiques du système électrique selon l'invention sont présentées ci-après.

La portion centrale de préhension peut s'étendre dans la même première direction globalement transversale à l'au moins une fenêtre d'accès.

L'au moins une membrane de protection peut comporter au moins un logement externe ménagé entre la portion centrale de préhension et le deuxième tronçon de la portion intermédiaire flexible.

La portion centrale de préhension peut présenter un tronçon central convexe qui définit un logement interne entre la portion centrale de préhension et l'au moins un appareillage électrique, logement interne dans lequel l'au moins un levier de réarmement peut se déplacer entre au moins une première position et au moins une deuxième position.

La portion centrale de préhension peut présenter un tronçon supplémentaire rejoignant à une première extrémité le tronçon central convexe et à une deuxième extrémité opposée à la première extrémité, le deuxième tronçon de la portion intermédiaire flexible.

Le tronçon supplémentaire peut s'étendre globalement selon une deuxième direction orthogonale à la première direction globalement transversale à l'au moins une fenêtre d'accès.

Le tronçon supplémentaire peut être plat et s'étendre en regard de l'au moins un appareillage électrique.

L'au moins une membrane de protection peut être logée au moins partiellement au travers de l'au moins une fenêtre d'accès.

Le contour de l'au moins une membrane de protection peut avoir globalement une forme oblongue ou circulaire.

La première lèvre du contour de l'au moins une membrane de protection peut s'étendre le long du bord à l'extérieur du boîtier et la deuxième lèvre du contour de l'au moins une membrane de protection peut s'étendre le long du bord **à** l'intérieur du boîtier.

La première lèvre peut s'étendre périphériquement au-delà de la deuxième lèvre.

La membrane de protection peut être réalisée en un matériau présentant des propriétés de transparence. Ainsi, une telle membrane de protection permet de rendre visible la position de l'au moins un levier de réarmement de l'au moins un appareillage électrique à travers la membrane de protection.

La membrane de protection peut être réalisée en un matériau plastique présentant des propriétés élastiques, du type élastomère.

L'au moins un appareillage électronique peut comporter en outre au moins un bouton actionnable, par exemple un bouton test situé à proximité de l'au moins un levier de réarmement ; l'au moins une membrane de protection étant en outre configurée pour permettre de manipuler l'au moins un bouton en étirant la portion intermédiaire flexible autour du pli.

L'invention a aussi pour objet, selon un deuxième aspect, un procédé d'utilisation d'un système électrique tel que décrit ci-dessus, comportant une étape de solliciter la portion centrale de préhension de l'au moins une membrane de protection en direction de l'au moins un levier de réarmement de l'au moins un appareillage électrique, pour le manipuler et le faire passer d'une première position à une deuxième position ou inversement, en étirant la portion intermédiaire flexible autour du pli raccordant l'au moins un premier tronçon et le deuxième tronçon de la portion intermédiaire flexible.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 représente schématiquement et en vue de face un système électrique, du type borne de recharge pour véhicule électrique ou hybride, conforme à l'invention.
La figure 2 est une vue en perspective partiellement éclatée du système électrique de la figure 1.
La figure 3 est une vue de face montrant de manière isolée une membrane de protection d'un appareillage électrique, montée sur le système électrique illustré sur les figures 1 et 2.
La figure 4 est une vue de dessus de la membrane de protection de la figure 3.
La figure 5 est une vue de côté de la membrane de protection des figures 3 et 4.
La figure 6 est une vue en coupe de la membrane de protection, repérée VI-VI sur la figure 3.
La figure 7 est une vue en coupe partielle montrant la coopération entre la membrane de protection et un levier de réarmement de l'appareillage électrique.

### DESCRIPTION DÉTAILLÉE DE L'INVENTION

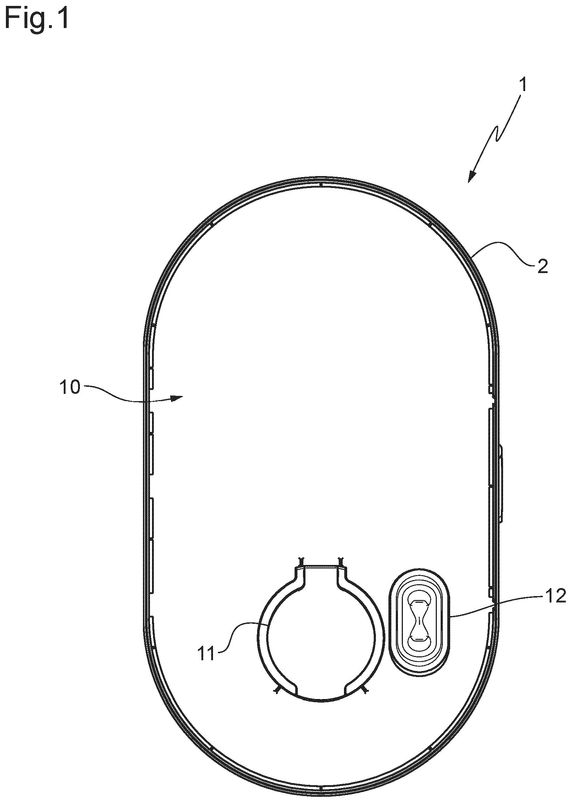

La figure 1 illustre un système électrique 1, ici formé par une borne de recharge pour véhicule électrique ou hybride.

Un tel système électrique 1 est pourvue d'un boîtier 2 dans lequel est introduit une électronique pour la recharge du véhicule électrique ou hybride à l'aide d'un cordon de recharge muni d'un câble et d'une fiche (non représentés).

Le boîtier 2 présente une face frontale 10 sur laquelle est montée une prise 11 configurée pour recevoir la fiche du cordon de recharge, et ainsi qu'un dispositif 12 configuré pour permettre ou non une alimentation électrique de la prise 11.

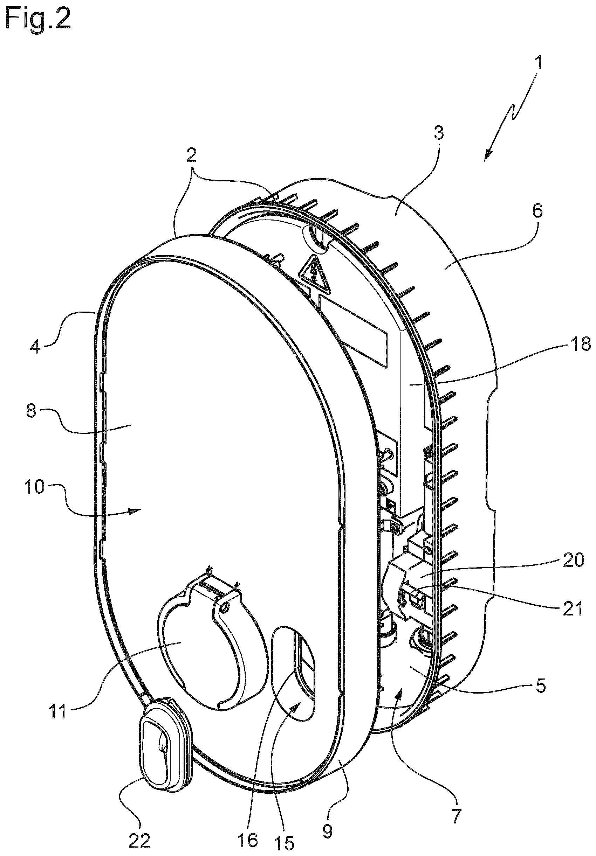

En particulier, en référence à la figure 2, le boîtier 2 comporte une première partie 3 et une deuxième partie 4 formant couvercle sur la première partie 3.

La première partie 3 du boîtier 2 comporte un logement 7 délimité par une première paroi de fond 5 et une deuxième paroi latérale 6 rattachée à la première paroi de fond 5.

La deuxième partie 4 du boîtier 2 comporte une troisième paroi de fermeture 8 formant le couvercle et définissant la face frontale 10 du boîtier 2, et une quatrième paroi latérale 9 rattachée périphériquement et transversalement à la troisième paroi de fermeture 8 de sorte à former un bord du couvercle.

Dans l'exemple illustré, la deuxième partie 4 est assujettie mécaniquement à la première partie 3, avec la quatrième paroi latérale 9 qui chevauche partiellement la deuxième paroi latérale 6.

Par exemple, la deuxième partie 4 peut être assujettie mécaniquement à la première partie 3 par clipsage et/ou vissage, ou tout autre moyen de fixation approprié.

Le système électrique 1 est pourvu d'une source d'alimentation électrique 18 qui est ici située dans le logement 7 du boîtier 2.

La source d'alimentation électrique 18 est configurée pour assurer une alimentation en électricité, notamment pour recharger un véhicule électrique ou hybride, via la prise 11.

Le système électrique 1 est en outre pourvu d'un appareillage électrique 20, formé ici par un disjoncteur.

L'appareillage électrique 20 est lui aussi située dans le logement 7 du boîtier 2.

L'appareillage électrique 20 est configuré pour permettre ou interrompre une continuité électrique entre la source d'alimentation électrique 18 et par exemple la prise 11, ou bien entre la source d'alimentation électrique 18 et le véhicule électrique ou hybride dans le cas où le système électrique 1 est directement muni d'un cordon de recharge solidaire du boîtier 2.

Pour ce faire, l'appareillage électrique 20 comporte un levier de réarmement 21.

Le levier de réarmement 21 est configuré pour être déplacé entre au moins une première position, dite enclenchée ou d'enclenchement, et au moins une deuxième position, dite déclenchée ou de déclenchement.

En particulier, lors d'un déclenchement de l'appareillage électrique 20, le levier de réarmement 21 est configuré pour passer de sa première position à sa deuxième position de sorte à interrompre la continuité électrique.

Pour enclencher l'appareillage électrique 20, par exemple suite au déclenchement de l'appareillage électrique 20, il suffit de déplacer le levier de réarmement 21 de sa deuxième position à sa première position de sorte à rétablir la continuité électrique.

Le boîtier 2 présente en outre une fenêtre d'accès 15 ici ménagée dans la deuxième partie 4 du boîtier 2.

La fenêtre d'accès 15 débouche sur la face frontale 10 et dans le logement 7.

La fenêtre d'accès 15 est donc traversante et permet d'accéder au moins partiellement au logement 7 depuis l'extérieur du boîtier 2.

Dans l'exemple illustré, la fenêtre d'accès 15 **a** globalement une forme oblongue et est délimitée par un bord 16 du boîtier 2.

Le levier de réarmement 21 de l'appareillage électrique 20 est accessible depuis la fenêtre d'accès 15 du boîtier 2.

Le système électrique 1 est pourvu en outre d'une membrane de protection 22.

La membrane de protection 22 est assujettie sur le boîtier 2 au niveau de la fenêtre d'accès 15 en épousant globalement le bord 16.

L'appareillage électrique 20, la fenêtre d'accès 15 et la membrane de protection 22 forment le dispositif 12.

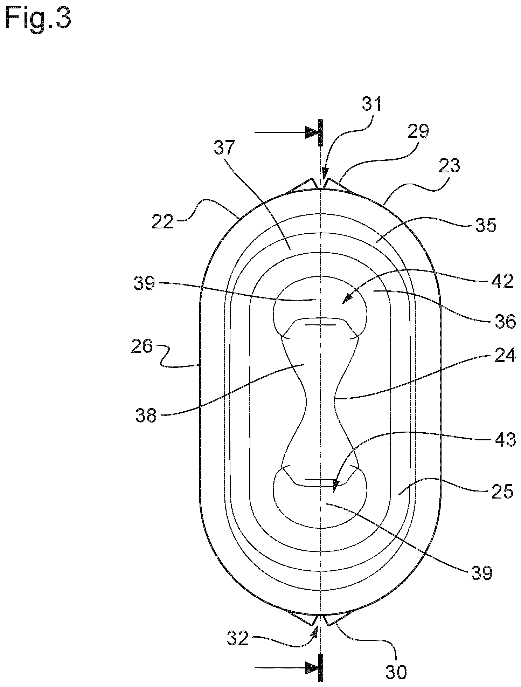

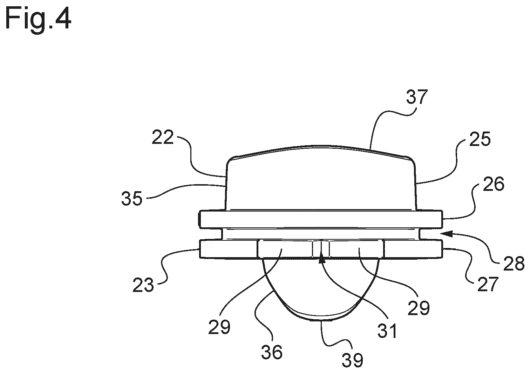

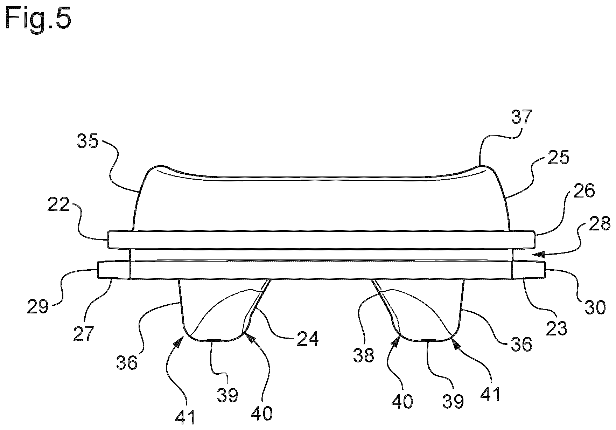

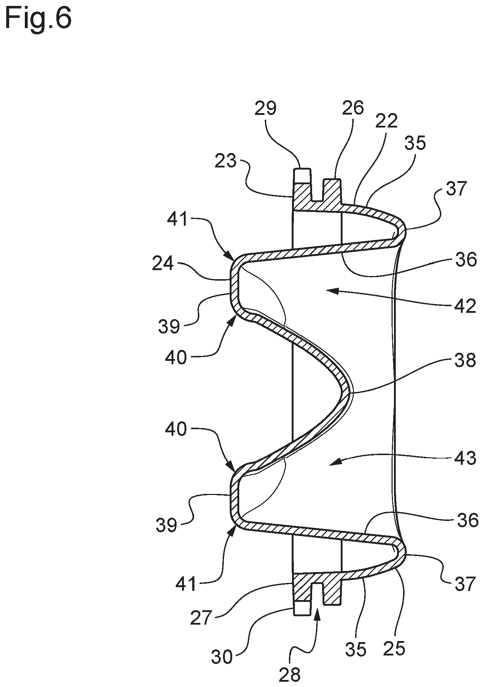

On va décrire plus en détail en référence aux figures 3 à 6 la membrane de protection 22 du système électrique 1.

La membrane de protection 22 est ici formée d'une seule pièce en matériau souple et déformable, par exemple en plastique.

Par exemple, la membrane de protection 22 est réalisée en un matériau plastique présentant des propriétés élastiques, du type élastomère.

Par exemple, la membrane de protection 22 est réalisée en un matériau présentant des propriétés de transparence, permettant de rendre visible la position du levier de réarmement 21 de l'appareillage électrique 20 à travers la membrane de protection 22.

La membrane de protection 22 présente un contour 23, une portion centrale de préhension 24 située à distance du contour 23, et une portion intermédiaire flexible 25 s'étendant entre le contour 23 et la portion centrale de préhension 24.

Dans l'exemple illustré, le contour 23 a globalement une forme oblongue.

Le contour 23 est formé par une première lèvre 26 et une deuxième lèvre 27 en regard de la première lèvre 26 de sorte à ménager une gorge périphérique 28.

La première lèvre 26 du contour 23 s'étend périphériquement au-delà de la deuxième lèvre 27.

En particulier, la deuxième lèvre 27 est pourvue d'une première protubérance 29 ménagée périphériquement et partiellement en saillie de la deuxième lèvre 27, et d'une deuxième protubérance 30 ménagée aussi périphériquement et partiellement en saillie de la deuxième lèvre 27 mais à l'opposé de la première protubérance 29.

En d'autres termes, la première protubérance 29 et la deuxième protubérance 30 ne s'étendent pas tout le long du contour 23 de la membrane de protection 22.

En particulier, la deuxième lèvre 27 présente ici une première fente 31 ménagée dans la première protubérance 29, et une deuxième fente 32 ménagée dans la deuxième protubérance 30.

La portion intermédiaire flexible 25 est pourvue d'un premier tronçon 35 s'étendant depuis le contour 23 selon une première direction.

La portion intermédiaire flexible 25 est en outre pourvue d'un deuxième tronçon 36 s'étendant depuis la portion centrale de préhension 24 selon la même première direction.

La portion intermédiaire flexible 25 est aussi pourvue d'un pli 37 raccordant le premier tronçon 35 et le deuxième tronçon 36.

Ainsi, la portion intermédiaire flexible 25 peut être déformée élastiquement autour du pli 37.

La portion centrale de préhension 24 présente un tronçon central convexe 38, qui s'étend dans la même première direction.

En particulier, le tronçon central convexe 38 est ici flexible et peut être déformé élastiquement.

La portion centrale de préhension 24 présente un tronçon supplémentaire 39 qui est, dans l'exemple illustré, globalement plat et qui s'étend selon une deuxième direction orthogonale à la première direction.

Le tronçon supplémentaire 39 s'étend entre une première extrémité 40 et une deuxième extrémité 41 opposée à la première extrémité 40.

Le tronçon supplémentaire 39 rejoint le tronçon central convexe 38 par sa première extrémité 40, et le deuxième tronçon 36 de la portion intermédiaire flexible 25 par sa deuxième extrémité 41.

La membrane de protection 22 comporte ici un premier logement externe 42 et un deuxième logement externe 43.

Le premier logement externe 42 et le deuxième logement externe 43 sont ménagés entre la portion centrale de préhension 24 et le deuxième tronçon 36 de la portion intermédiaire flexible 25.

En particulier, le premier logement externe 42 et le deuxième logement externe 43 sont séparés l'un de l'autre par le tronçon central convexe 38 qui est flexible.

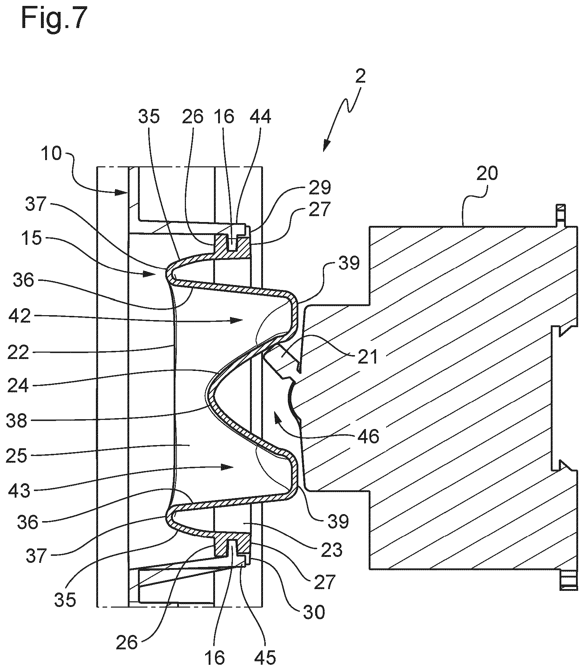

On va maintenant décrire, en référence à la figure 7, la coopération entre la membrane de protection 22 et la fenêtre d'accès 15 du boîtier 2, ainsi que la coopération entre la membrane de protection 22 et le levier de réarmement 21 de l'appareillage électrique 20 lorsqu'un utilisateur souhaite actionner le levier de réarmement 21.

La membrane de protection 22 est configurée pour étancher le boîtier 2 au niveau de la fenêtre d'accès 15.

La membrane de protection 22 est configurée pour permettre de manipuler le levier de réarmement 21 de l'appareillage électrique 20 par la fenêtre d'accès 15 en étirant la portion intermédiaire flexible 25 autour du pli 37, sans retirer la membrane de protection 22 de la fenêtre d'accès 15.

En particulier, la membrane de protection 22 est configurée pour fournir une zone de préhension formée par la portion centrale de préhension 24 et une zone d'étirement formée par la portion intermédiaire flexible 25.

En d'autres termes, la zone d'étirement formée par la portion intermédiaire flexible 25 permet de rendre mobile la zone de préhension formée par la portion centrale de préhension 24, facilitant ainsi la manipulation du levier de réarmement 21, sans détériorer la membrane de protection 22 et sans la retirer du boîtier 2.

Dans l'exemple illustré, la membrane de protection 22 est logée partiellement au travers de la fenêtre d'accès 15 du boîtier 2.

En particulier, la fenêtre d'accès 15 du boîtier 2 est ici configurée de sorte que la membrane 22 ne saille pas de la face frontale 10 du boîtier 2.

La membrane de protection 22 est assujettie par son contour 23 sur le bord 16 du boîtier 2 délimitant la fenêtre d'accès 15.

Le bord 16 est introduit dans la gorge périphérique 28 et pincé par la première lèvre 26 et la deuxième lèvre 27 du contour 23 de la membrane de protection 22.

En particulier, la première lèvre 26 du contour 23 s'étend le long du bord 16 à l'extérieur du boîtier 2 et la deuxième lèvre 27 du contour 23 s'étend le long du bord 16 à l'intérieur du boîtier 2.

Ainsi, le contour 23 de la membrane de protection 22 permet, en pinçant le bord 16 de la fenêtre d'accès 15, d'assurer l'étanchéité du boîtier 2 au niveau de la fenêtre d'accès 15.

La fenêtre 15 du boîtier 2 comporte ici une première buté 44 et une deuxième buté 45 qui s'étendent transversalement au bord 15.

La première buté 44 et la deuxième buté 45 saillent vers l'intérieur du logement 7 du boîtier 2.

La première buté 44 est introduite dans la première fente 31 de la deuxième lèvre 27, tandis que la deuxième buté 45 est introduite dans la deuxième fente 32 de la deuxième lèvre 27.

Ainsi, la première buté 44 coopère avec la première protubérance 29 de la deuxième lèvre 27, tandis que la deuxième buté 45 coopère avec la deuxième protubérance 30 de la deuxième lèvre 27, de sorte à empêcher toute rotation de la membrane de protection 22 dans la fenêtre d'accès 15.

Le premier tronçon 35 de la portion intermédiaire flexible 25 s'étend depuis le contour 23 selon une première direction globalement transversale à la fenêtre d'accès 15.

Le premier tronçon 35 s'étend ici en dehors du logement 7 du boîtier 2.

En particulier, le premier tronçon 35 ne saille pas ici de la face frontale 10 du boîtier 2.

Le deuxième tronçon 36 de la portion intermédiaire flexible 25 s'étend depuis la portion centrale de préhension 24 selon la même première direction globalement transversale à la fenêtre d'accès 15.

Le deuxième tronçon 36 s'étend ici en dehors et à l'intérieur du logement 7 du boîtier 2.

En particulier, le deuxième tronçon 36 ne saille pas ici de la face frontale 10 du boîtier 2.

Le pli 37 raccordant le premier tronçon 35 et le deuxième tronçon 36 se situe ici en dehors du logement 7 du boîtier 2.

En particulier, le pli 37 ne saille pas ici de la face frontale 10 du boîtier 2.

La portion centrale de préhension 24 de la membrane de protection 22 se trouve en regard du levier de réarmement 21.

La portion centrale de préhension 24 s'étend dans la même première direction globalement transversale à la fenêtre d'accès 15.

Le tronçon central convexe 38 de la portion centrale de préhension 24 s'étend ici en dehors et à l'intérieur du logement 7 du boîtier 2.

En particulier, le tronçon central convexe 38 ne saille pas ici de la face frontale 10 du boîtier 2.

Le tronçon central convexe 38 est accessible depuis l'extérieur du boîtier 2.

Le tronçon central convexe 38 définit un logement interne 46 entre la portion centrale de préhension 24 et l'appareillage électrique 20, dans le logement du boîtier 2.

Le logement interne 46 permet au levier de réarmement 21 de se déplacer entre au moins sa première position et sa deuxième position.

En d'autres termes, le logement interne 46 permet ici au moins le déclenchement de l'appareillage électrique 20.

Le tronçon supplémentaire 39 de la portion centrale de préhension 24 s'étend globalement selon une deuxième direction orthogonale à la première direction globalement transversale à la fenêtre d'accès 15.

Le tronçon supplémentaire 39 s'étend en regard de l'appareillage électrique 20.

En d'autres termes, le tronçon supplémentaire 39 s'étend à l'intérieur du logement 7 du boîtier 2.

Le premier logement externe 42 et le deuxième logement externe 43 sont accessibles depuis l'extérieur du boîtier 2.

Pour utiliser le dispositif 12 du système électrique 1, il suffit de solliciter la portion centrale de préhension 24 de la membrane de protection 22 en direction du levier de réarmement 21 de l'appareillage électrique 20, pour le manipuler et le faire passer de sa première position à sa deuxième position ou inversement, en étirant la portion intermédiaire flexible 25 autour du pli 37 raccordant le premier tronçon 35 et le deuxième tronçon 36 de la portion intermédiaire flexible 25.

Ainsi, dans le système électrique 1, la membrane de protection 22 permet à la fois d'étancher et de manipuler directement et sûrement le levier de réarmement 21 de l'appareillage électrique 20 au travers de la fenêtre d'accès 15 ménagée dans le boîtier 2.

Des variantes non illustrées sont décrites ci-dessous.

Le système électrique peut comporter une pluralité d'appareillage électriques, notamment similaires ou différents les uns des autres, par exemple des interrupteurs différentiels et/ou des disjoncteurs.

Le système électrique peut comporter un boîtier ayant une pluralité de fenêtres d'accès, et une pluralité de membranes de protection assujetties sur le boîtier au niveau de la pluralité de fenêtres d'accès.

Le bord délimitant la fenêtre, tout comme le contour de la membrane de protection, peuvent avoir une forme circulaire, ou une forme quelconque et pas forcément oblongue.

L'appareillage électronique peut comporter en outre au moins un bouton actionnable, par exemple un bouton test situé à proximité du levier de réarmement ; la membrane de protection étant en outre configurée pour permettre de manipuler l'au moins un bouton en étirant la portion intermédiaire flexible autour du pli.

Plus généralement, l'invention ne se limite pas aux exemples décrits et représentés.

## Revendications

1. Système électrique (1), notamment une borne de recharge d'un véhicule électrique ou hybride, pourvu d'un boîtier (2) ayant au moins une fenêtre d'accès (15), d'au moins un appareillage électrique (20), notamment du type disjoncteur ou interrupteur différentiel, logé dans le boîtier (2) et comportant au moins un levier de réarmement (21) de l'au moins un appareillage électrique (20) accessible directement depuis l'au moins une fenêtre d'accès (15) du boîtier (2), et d'au moins une membrane de protection (22) assujettie sur le boîtier (2) au niveau de l'au moins une fenêtre d'accès (15) et configurée pour étancher le boîtier (2) au niveau de l'au moins une fenêtre d'accès (15) et pour permettre de manipuler l'au moins un levier de réarmement (21) par l'au moins une fenêtre d'accès (15) ; l'au moins une membrane de protection (22) comportant :
un contour (23) formé par une première lèvre (26) et une deuxième lèvre (27) en regard de la première lèvre (26) de sorte à ménager une gorge périphérique (28), avec l'au moins une membrane de protection (22) qui est assujettie par son contour (23) sur un bord (16) du boîtier (2) délimitant l'au moins une fenêtre d'accès (15), lequel bord (16) est introduit dans ladite gorge périphérique (28) et pincé par la première lèvre (26) et la deuxième lèvre (27) ;
une portion centrale de préhension (24) située à distance du contour (23) et en regard de l'au moins un levier de réarmement (21) ;
une portion intermédiaire flexible (25) s'étendant entre le contour (23) et la portion centrale de préhension (24) et qui est pourvue d'au moins un premier tronçon (35) s'étendant depuis le contour (23) selon une première direction globalement transversale à l'au moins une fenêtre d'accès (15), d'un deuxième tronçon (36) s'étendant depuis la portion centrale de préhension (24) selon la même première direction globalement transversale, et d'un pli (37) raccordant l'au moins un premier tronçon (35) et le deuxième tronçon (36) ;
avec l'au moins une membrane de protection (22) qui est configurée pour permettre de manipuler l'au moins un levier de réarmement (21) en étirant la portion intermédiaire flexible (25) autour du pli (37).

2. Système électrique (1) selon la revendication 1, **caractérisé en ce que** la portion centrale de préhension (24) s'étend dans la même première direction globalement transversale à l'au moins une fenêtre d'accès (15).

3. Système électrique (1) selon la revendication 2, **caractérisé en ce que** l'au moins une membrane de protection (22) comporte au moins un logement externe (42, 43) ménagé entre la portion centrale de préhension (24) et le deuxième tronçon (36) de la portion intermédiaire flexible (25).

4. Système électrique (1) selon l'une quelconque des revendications 1 à 3, **caractérisé en ce que** la portion centrale de préhension (24) présente un tronçon central convexe (38) qui définit un logement interne (46) entre la portion centrale de préhension (24) et l'au moins un appareillage électrique (20), logement interne (46) dans lequel l'au moins un levier de réarmement (21) peut se déplacer entre au moins une première position et au moins une deuxième position.

5. Système électrique (1) selon la revendication 4, **caractérisé en ce que** la portion centrale de préhension (24) présente un tronçon supplémentaire (39) rejoignant à une première extrémité (40) le tronçon central convexe (38) et à une deuxième extrémité (41) opposée à la première extrémité (40), le deuxième tronçon (36) de la portion intermédiaire flexible (25).

6. Système électrique (1) selon la revendication 5, **caractérisé en ce que** le tronçon supplémentaire (39) s'étend globalement selon une deuxième direction orthogonale à la première direction globalement transversale à l'au moins une fenêtre d'accès (15).

7. Système électrique (1) selon l'une des revendications 5 et 6, **caractérisé en ce que** le tronçon supplémentaire (39) est plat et s'étend en regard de l'au moins un appareillage électrique (20).

8. Système électrique (1) selon l'une quelconque des revendications 1 à 7, **caractérisé en ce que** l'au moins une membrane de protection (22) est logée au moins partiellement au travers de l'au moins une fenêtre d'accès (15).

9. Système électrique (1) selon l'une quelconque des revendications 1 à 8, **caractérisé en ce que** le contour (23) de l'au moins une membrane de protection (22) a globalement une forme oblongue ou circulaire.

10. Système électrique (1) selon l'une quelconque des revendications 1 à 9, **caractérisé en ce que** la première lèvre (26) du contour (23) de l'au moins une membrane de protection (22) s'étend le long du bord (16) à l'extérieur du boîtier (2) et la deuxième lèvre (27) du contour (23) de l'au moins une membrane de protection (22) s'étend le long du bord (16) à l'intérieur du boîtier (2).

11. Système électrique (1) selon la revendication 10, **caractérisé en ce que** la première lèvre (26) s'étend périphériquement au-delà de la deuxième lèvre (27).

12. Système électrique (1) selon l'une quelconque des revendications 1 à 11, **caractérisé en ce que** l'au moins une membrane de protection (22) est réalisée en un matériau présentant des propriétés de transparence.

13. Système électrique (1) selon l'une quelconque des revendications 1 à 12, **caractérisé en ce que** l'au moins une membrane de protection (22) est réalisée en un matériau plastique présentant des propriétés élastiques, du type élastomère.

14. Système électrique (1) selon l'une quelconque des revendications 1 à 13, **caractérisé en ce que** l'au moins un appareillage électronique comporte en outre au moins un bouton actionnable situé à proximité de l'au moins un levier de réarmement ; et l'au moins une membrane de protection est en outre configurée pour permettre de manipuler l'au moins un bouton en étirant la portion intermédiaire flexible autour du pli.

15. Procédé d'utilisation d'un système électrique (1) selon l'une quelconque des revendications 1 à 14, comportant une étape de solliciter la portion centrale de préhension (24) de l'au moins une membrane de protection (22) en direction de l'au moins un levier de réarmement (21) de l'au moins un appareillage électrique (20), pour le manipuler et le faire passer d'une première position à une deuxième position ou inversement, en étirant la portion intermédiaire flexible (25) autour du pli (37) raccordant l'au moins un premier tronçon (35) et le deuxième tronçon (36) de la portion intermédiaire flexible (25).

## Patentansprüche

1. Elektrisches System (1), insbesondere eine Ladestation eines Elektro- oder Hybridfahrzeugs, das mit einem Gehäuse (2) versehen ist, das mindestens ein Zugangsfenster (15), mindestens eine elektrische Einrichtung (20), insbesondere vom Typ Leistungsschalter oder Fehlerstromschutzschalter, aufweist, die im Gehäuse (2) aufgenommen ist und mindestens einen Rückstellhebel (21) der mindestens einen elektrischen Einrichtung (20) einschließt, die direkt von dem mindestens einen Zugangsfenster (15) des Gehäuses (2) aus zugänglich ist, und mindestens eine Schutzmembran (22), die am Gehäuse (2) im Bereich des mindestens einen Zugangsfensters (15) festgemacht und ausgebildet ist, um das Gehäuse (2) im Bereich des mindestens einen Zugangsfensters (15) abzudichten, und um zu ermöglichen, den mindestens einen Rückstellhebel (21) durch das mindestens eine Zugangsfenster (15) zu bedienen; wobei die mindestens eine Schutzmembran (22) einschließt:
eine Kontur (23), die durch eine erste Lippe (26) und eine zweite Lippe (27) gegenüber der ersten Lippe (26) gebildet ist, so dass sie eine umlaufende Nut (28) einrichtet, mit mindestens einer Schutzmembran (22), die durch ihre Kontur (23) an einer Kante (16) des Gehäuses (2) befestigt ist, die das mindestens eine Zugangsfenster (15) begrenzt, wobei die Kante (16) in die umlaufende Nut (28) eingeführt und von der ersten Lippe (26) und der zweiten Lippe (27) eingeklemmt wird;
einen zentralen Greifabschnitt (24), der sich in einem Abstand von der Kontur (23) und gegenüber dem mindestens einen Rückstellhebel (21) befindet;
einen flexiblen Zwischenabschnitt (25), der sich zwischen der Kontur (23) und dem zentralen Greifabschnitt (24) erstreckt und der mit mindestens einer ersten Strecke (35), die sich von der Kontur (23) in einer ersten allgemeinen Querrichtung bis zum mindestens einen Zugangsfenster (15) erstreckt, einer zweiten Strecke (36), die sich von dem zentralen Greifabschnitt (24) in der gleichen ersten allgemeinen Querrichtung erstreckt, und einer Falte (37) versehen ist, welche die mindestens eine erste Strecke (35) und die zweite Strecke (36) verbindet;
mit der mindestens einen Schutzmembran (22), die ausgebildet ist, um zu ermöglichen, den mindestens einen Rückstellhebel (21) durch Dehnen des flexiblen Zwischenabschnitts (25) um die Falte (37) herum zu bedienen.

2. Elektrisches System (1) nach Anspruch 1, **dadurch gekennzeichnet, dass** sich der zentrale Greifabschnitt (24) in der gleichen ersten allgemeinen Querrichtung zum mindestens einen Zugangsfenster (15) erstreckt.

3. Elektrisches System (1) nach Anspruch 2, **dadurch gekennzeichnet, dass** die mindestens eine Schutzmembran (22) mindestens eine äußere Aufnahme (42, 43) einschließt, die zwischen dem zentralen Greifabschnitt (24) und der zweiten Strecke (36) des flexiblen Zwischenabschnitts (25) eingerichtet ist.

4. Elektrisches System (1) nach einem der Ansprüche 1 bis 3, **dadurch gekennzeichnet, dass** der zentrale Greifabschnitt (24) eine konvexe mittlere Strecke (38) aufweist, die eine innere Aufnahme (46) zwischen dem zentralen Greifabschnitt (24) und der mindestens einen elektrischen Einrichtung (20) definiert, wobei sich der sich der mindestens eine Rückstellhebel (21) in der inneren Aufnahme (46), zwischen mindestens einer ersten Position und mindestens einer zweiten Position bewegen kann.

5. Elektrisches System (1) nach Anspruch 4, **dadurch gekennzeichnet, dass** der zentrale Greifabschnitt (24) eine zusätzliche Strecke (39) aufweist, der an einem ersten Ende (40) die konvexe mittlere Strecke (38) und an einem zweiten Ende (41) gegenüber dem ersten Ende (40) die zweite Strecke (36) des flexiblen Zwischenabschnitts (25) verbindet.

6. Elektrisches System (1) nach Anspruch 5, **dadurch gekennzeichnet, dass** sich die zusätzliche Strecke (39) insgesamt in einer zweiten Richtung orthogonal zur ersten Richtung insgesamt quer zum mindestens einen Zugangsfenster (15) erstreckt.

7. Elektrisches System (1) nach einem der Ansprüche 5 und 6, **dadurch gekennzeichnet, dass** die zusätzliche Strecke (39) flach ist und sich gegenüber der mindestens einen elektrischen Einrichtung (20) erstreckt.

8. Elektrisches System (1) nach einem der Ansprüche 1 bis 7, **dadurch gekennzeichnet, dass** die mindestens eine Schutzmembran (22) mindestens teilweise durch das mindestens eine Zugangsfenster (15) aufgenommen ist.

9. Elektrisches System (1) nach einem der Ansprüche 1 bis 8, **dadurch gekennzeichnet, dass** die Kontur (23) der mindestens einen Schutzmembran (22) insgesamt eine längliche oder kreisförmige Form aufweist.

10. Elektrisches System (1) nach einem der Ansprüche 1 bis 9, **dadurch gekennzeichnet, dass** sich die erste Lippe (26) der Kontur (23) der mindestens einen Schutzmembran (22) entlang der Kante (16) außerhalb des Gehäuses (2) und die zweite Lippe (27) der Kontur (23) der mindestens einen Schutzmembran (22) entlang der Kante (16) innerhalb des Gehäuses (2) erstreckt.

11. Elektrisches System (1) nach Anspruch 10, **dadurch gekennzeichnet, dass** sich die erste Lippe (26) peripher über die zweite Lippe (27) hinaus erstreckt.

12. Elektrisches System (1) nach einem der Ansprüche 1 bis 11, **dadurch gekennzeichnet, dass** die mindestens eine Schutzmembran (22) aus einem Material hergestellt ist, das Transparenzeigenschaften aufweist.

13. Elektrisches System (1) nach einem der Ansprüche 1 bis 12, **dadurch gekennzeichnet, dass** die mindestens eine Schutzmembran (22) aus einem Kunststoff vom Typ Elastomer hergestellt ist, der elastische Eigenschaften aufweist.

14. Elektrisches System (1) nach einem der Ansprüche 1 bis 13, **dadurch gekennzeichnet, dass** die mindestens eine elektronische Einrichtung weiter mindestens einen betätigbaren Knopf in der Nähe des mindestens einen Rückstellhebels einschließt; und die mindestens eine Schutzmembran weiter ausgebildet ist, um zu ermöglichen, den mindestens einen Knopf durch Dehnen des flexiblen Zwischenabschnitts um die Falte herum zu bedienen.

15. Verfahren zur Verwendung eines elektrischen Systems (1) nach einem der Ansprüche 1 bis 14, das einen Schritt zum Beanspruchen des zentralen Greifabschnitts (24) der mindestens einen Schutzmembran (22) in Richtung des mindestens einen Rückstellhebels (21) der mindestens einen elektrischen Einrichtung (20) einschließt, um ihn zu bedienen und von einer ersten Position in eine zweite Position oder umgekehrt durch Dehnen des flexiblen Zwischenabschnitts (25) um die Falte (37) herum, welche die mindestens eine erste Strecke (35) und die zweite Strecke (36) des flexiblen Zwischenabschnitts (25) verbindet, verlaufen zu lassen.

## Claims

1. An electrical system (1), especially a charging station for an electric or hybrid vehicle, provided with a casing (2) having at least one access window (15), at least one electrical apparatus (20), especially of the circuit breaker or differential switch type, housed in the casing (2) and comprising at least one reset lever (21) of the at least one electrical apparatus (20) directly accessible from the at least one access window (15) of the casing (2), and at least one protective membrane (22) secured to the casing (2) at the at least one access window (15) and configured to seal the casing (2) at the at least one access window (15) and to enable the at least one reset lever (21) to be manipulated by the at least one access window (15); the at least one protective membrane (22) comprising:
a contour (23) formed by a first lip (26) and a second lip (27) facing the first lip (26) so as to provide a peripheral groove (28), with the at least one protective membrane (22) which is secured by its contour (23) to an edge (16) of the casing (2) delimiting the at least one access window (15), which edge (16) is introduced into said peripheral groove (28) and pinched by the first lip (26) and the second lip (27);
a central gripping portion (24) located away from the contour (23) and facing the at least one reset lever (21);
a flexible intermediate portion (25) extending between the contour (23) and the central gripping portion (24) and which is provided with at least one first section (35) extending from the contour (23) along a first overall transverse direction to the at least one access window (15), a second section (36) extending from the central gripping portion (24) along the same first overall transverse direction, and a fold (37) connecting the at least one first section (35) and the second section (36);
with the at least one protective membrane (22) which is configured to allow manipulating the at least one reset lever (21) by stretching the flexible intermediate portion (25) around the fold (37).

2. The electrical system (1) according to claim 1, **characterised in that** the central gripping portion (24) extends in the same first overall transverse direction to the at least one access window (15).

3. The electrical system (1) according to claim 2, **characterised in that** the at least one protective membrane (22) comprises at least one external housing (42, 43) provided between the central gripping portion (24) and the second section (36) of the flexible intermediate portion (25).

4. The electrical system (1) according to any one of claims 1 to 3, **characterised in that** the central gripping portion (24) has a convex central section (38) that defines an internal housing (46) between the central gripping portion (24) and the at least one electrical apparatus (20), in which internal housing (46) the at least one reset lever (21) can move between at least one first position and at least one second position.

5. The electrical system (1) according to claim 4, **characterised in that** the central gripping portion (24) has an additional section (39) joining at a first end (40) the convex central section (38) and at a second end (41) opposite to the first end (40), the second section (36) of the flexible intermediate portion (25).

6. The electrical system (1) according to claim 5, **characterised in that** the additional section (39) overall extends along a second direction orthogonal to the first overall transverse direction to the at least one access window (15).

7. The electrical system (1) according to one of claims 5 and 6, **characterised in that** the additional section (39) is flat and extends facing the at least one electrical apparatus (20).

8. The electrical system (1) according to any one of claims 1 to 7, **characterised in that** the at least one protective membrane (22) is housed at least partially through the at least one access window (15).

9. The electrical system (1) according to any one of claims 1 to 8, **characterised in that** the contour (23) of the at least one protective membrane (22) has an overall oblong or circular shape.

10. The electrical system (1) according to any one of claims 1 to 9, **characterised in that** the first lip (26) of the contour (23) of the at least one protective membrane (22) extends along the edge (16) outside the casing (2) and the second lip (27) of the contour (23) of the at least one protective membrane (22) extends along the edge (16) inside the casing (2).

11. The electrical system (1) according to claim 10, **characterised in that** the first lip (26) extends peripherally beyond the second lip (27).

12. The electrical system (1) according to any one of claims 1 to 11, **characterised in that** the at least one protective membrane (22) is made of a material having transparency properties.

13. The electrical system (1) according to any one of claims 1 to 12, **characterised in that** the at least one protective membrane (22) is made of a plastic material having elastic, of the elastomer type, properties.

14. The electrical system (1) according to any one of claims 1 to 13, **characterised in that** the at least one electronic apparatus further comprises at least one actuatable button located in proximity to the at least one reset lever; and the at least one protective membrane is further configured to allow manipulating the at least one button by stretching the flexible intermediate portion around the fold.

15. A method of using an electrical system (1) according to any one of claims 1 to 14, comprising a step of operating the central gripping portion (24) of the at least one protective membrane (22) toward the at least one reset lever (21) of the at least one electrical apparatus (20), to manipulate it and switch it from a first position to a second position or vice versa, by stretching the flexible intermediate portion (25) around the fold (37) connecting the at least one first section (35) and the second section (36) of the flexible intermediate portion (25).
